# EUROPEAN PATENT SPECIFICATION

(11) **EP 3 145 116 B1**
(45) Date of publication and mention of the grant of the patent: **15.04.2020**
(21) Application number: 15306450.6
(22) Date of filing: 17.09.2015
(51) Int. Cl.: H04L 9/32, G07F 7/08

(54) **METHOD AND SYSTEM FOR TERMINAL TO SECURE ELEMENT COMMUNICATION**
VERFAHREN UND SYSTEM ZUR KOMMUNIKATION VON ENDGERÄT ZU SICHEREM ELEMENT
PROCÉDÉ ET SYSTÈME DE COMMUNICATION DE TERMINAL À UN ÉLÉMENT SÉCURISÉ

(43) Date of publication of application: 22.03.2017
(73) Proprietor: IDEMIA France, 92400 Courbevoie (FR)
(72) Inventor: CHAMBEROT, Francis, 92700 Colombes (FR); CLIMEN, Bruno, 92700 Colombes (FR)
(74) Representative: Santarelli

(56) References cited:
- EP-A1- 2 711 903
- US-A1- 2014 164 771
- JAYASINGHE DANUSHKA ET AL: "Enhancing EMV Online PIN Verification", 2015 IEEE TRUSTCOM/BIGDATASE/ISPA, IEEE, vol. 1, 20 August 2015 (2015-08-20), pages 808-817, XP032819732, DOI: 10.1109/TRUSTCOM.2015.451 [retrieved on 2015-12-02]

## Description

### BACKGROUND

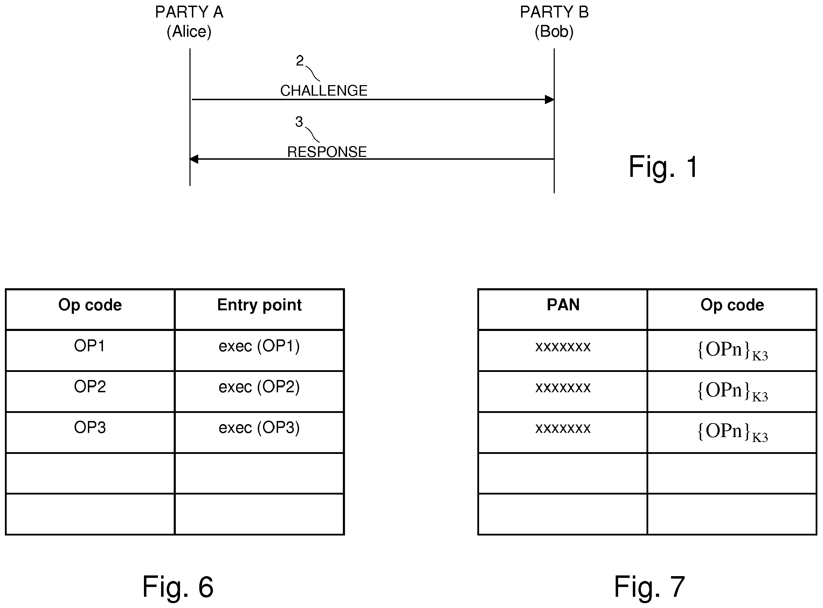

A challenge-response exchange between parties is used in various communication protocols. Figure 1 shows a simple example. Alice sends Bob a challenge 2, such as a message containing a string of characters "MQR" for example. Bob transforms this string using a cryptographic algorithm, T, with a key, k: T('"MQR", k) to produce a response "SAT" for example. Bob sends the response 3 to Alice. Alice executes the same algorithm with her copy of the key, k': T("MQR", k'). If Alice obtains the same result as Bob's response, "SAT", she knows that Bob has a copy of her key, k'. When a match is found, it can be said that the response fits the challenge. This kind of exchange finds applications in many authentication protocols. For any given challenge there is only one response that fits.

Integrated Circuit Cards (ICC) can use a challenge-response exchange as part of a communication exchange between the card and a terminal.

The document EP 2711903 discloses a method to securely manage and confirm transaction. The document US 2014/0164771 discloses a method for managing an embedded secure element.

### SUMMARY

According to the present invention, there are provided methods and devices according to the independent claims 1, 7, 8 and 12.

An aspect of the disclosure provides a method of communicating between a terminal and a secure element comprising, at the secure element:
determining a challenge;
sending the challenge to the terminal;
receiving a response from the terminal comprising the challenge and personal identification number, PIN, data, the response encrypted with a key;
determining if the challenge received in the response matches the challenge sent to the terminal; and
if the challenge received in the response does not match the challenge sent to the terminal, further comprising:
   performing a computation using the received challenge and the sent challenge; and
   recovering a data element carried by the response, wherein the data element is indicative of an action to be performed by the secure element.

Performing a computation may comprise performing a bit-wise operation between the received challenge and the sent challenge.

The bit-wise operation may be an exclusive OR, XOR, operation.

The data element may be an operation code which is indicative of a security action to be performed by the secure element. The method may further comprise performing the security action according to the value of the operation code.

The data element may be an encrypted operation code. The encryption of the operation code is different to the encryption of the response received from the terminal.

The method may comprise decrypting the response before determining if the challenge received in the response matches the challenge sent to the terminal.

The method may be performed as part of an offline transaction.

Another aspect of the disclosure provides a method of communicating between a terminal and a secure element comprising, at the terminal:
receiving a challenge from the secure element;
determining if there is a need to send a data element to the secure element;
if there is not a need to send a data element to the secure element, sending an encrypted response to the secure element, the response comprising the challenge and personal identification number, PIN, data; and
if there is a need to send a data element to the secure element:
   performing a computation of the challenge with the data element to produce a modified challenge; and
   sending an encrypted response to the secure element, the response comprising the modified challenge and the personal identification number, PIN, data, wherein the data element is recoverable from the modified challenge by the secure element, and the data element is indicative of an action to be performed by the secure element.

Determining if there is a need to send a data element to the secure element may comprise determining if a number of the secure element is on a blacklist of numbers, and if the number of the secure element is on the blacklist of numbers, sending a data element indicative of an action to block the secure element.

Another aspect of the disclosure provides a secure element comprising a processor, a memory and a communications interface, the memory containing instructions executable by the processor to cause the processor to:
determine a challenge;
send the challenge to a terminal via the communications interface;
receive a response from the terminal comprising the challenge and personal identification number, PIN, data, the response encrypted with a key;
determine if the challenge received in the response matches the challenge sent to the terminal; and
if the challenge received in the response does not match the challenge sent to the terminal, the instructions further causing the processor to:
   perform a computation using the received challenge and the sent challenge; and
   recover a data element carried by the response, wherein the data element is indicative of an action to be performed by the secure element.

The computation may be a bit-wise operation between the received challenge and the sent challenge.

The data element may be an operation code which is indicative of a security action to be performed by the secure element, and the instructions may cause the processor to perform the security action according to the value of the operation code.

The data element may be an encrypted operation code.

Another aspect of the disclosure provides a terminal comprising a processor, a memory and a communications interface, the memory containing instructions executable by the processor to cause the processor to:
receive a challenge from a secure element;
determine if there is a need to send a data element to the secure element;
if there is not a need to send a data element to the secure element, sending an encrypted response to the secure element, the response comprising the challenge and personal identification number, PIN, data; and
if there is a need to send a data element to the secure element:
   perform a computation of the challenge with the data element to produce a modified challenge; and
   send an encrypted response to the secure element, the response comprising the modified challenge and the personal identification number, PIN, data, wherein the data element is recoverable from the modified challenge by the secure element, and the data element is indicative of an action to be performed by the secure element.

The instructions which cause the processor to determine if there is a need to send a data element to the secure element may cause the processor to determine if a number of the secure element is on a blacklist of numbers, and if the number of the secure element is on the blacklist of numbers, send a data element indicative of an action to block the secure element.

The secure element may comprise a microprocessor with non-volatile memory to store an application and associated cryptographic keys. The secure element may communicate with a terminal via ISO 7816 APDUs. The secure element may comprise hardware elements for computing cryptographic algorithms, such as symmetric and asymmetric cryptographic algorithms. The secure element may be embedded into an ISO 7810 format card, such as an ID-1 format card (e.g. typically used for bank cards and credit/debit cards) or an ID-000 format card (e.g. typically used for SIM cards). The secure element may be embedded directly into a circuit board, such as a mobile phone circuit board.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described or claimed methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

An advantage of at least one example of the disclosure is that the terminal can send additional data to the secure element at the time of sending the response. The data element can be used to convey information, or a command, which can instruct the secure element to perform an action, such as a security-related action to block the secure element. The additional data can be sent without extending the length of the message carrying the response, thereby making the method compatible with existing systems.

### BRIEF DESCRIPTION OF THE DRAWINGS

Embodiments of the invention will be described, by way of example only, with reference to the accompanying drawings in which:
Figure 1 shows a challenge-response exchange;
Figure 2 shows an example communication exchange between a terminal and a secure element;
Figure 3 shows a method performed at the secure element;
Figures 4A and 4B show two examples of message processing at a terminal;
Figures 5A and 5B show two examples of message processing at a terminal;
Figure 6 shows a table stored at the secure element;
Figure 7 shows a table stored at the terminal;
Figure 8 shows an integrated circuit card (ICC), a terminal and authorisation entity which can be used to implement one of the methods;
Figure 9 shows apparatus for a computer-based implementation.

### DETAILED DESCRIPTION

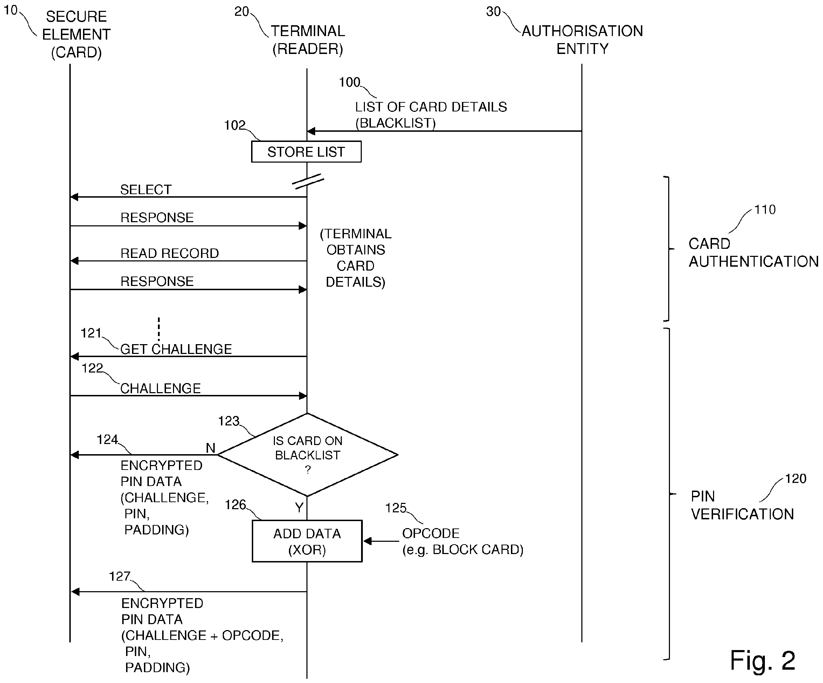

Figure 2 shows an example of a communication method performed between a secure element 10, a terminal 20 and an authorisation entity 30. The following description uses an integrated circuit card (ICC) as an illustrative example of an entity which comprises a secure element. Another term for "integrated circuit card" (ICC) is a chip card. The secure element on the card can support payment applications, such as a credit payment application and/or or a debit payment application. The card 10 can conform to the Europay, MasterCard, and Visa (EMV) Specifications. The terminal 20 can also be called a card reader. The terminal can be provided at a point of sale (PoS) of a merchant. The authorisation entity 30 can be a bank, a card issuer, or some other entity which authorises card transactions on behalf of the card issuer.

At 100, the authorisation entity 30 sends the terminal a list of card details identifying certain cards. This list can be called a blacklist. The blacklist identifies cards which should not be authorised if they are presented for a transaction at the terminal. The terminal 20 can use the blacklist when processing offline transactions or online transactions. An offline transaction is a transaction where the terminal does not communicate with the authorisation entity 30 before authorising the transaction at the terminal. An online transaction is a transaction where the terminal communicates with the authorisation entity 30 to receive an authorisation, or a refusal, from the authorisation entity 30 before proceeding to accept or refuse the transaction at the terminal. The cards identified in the blacklist may be cards which have been reported as stolen by card owners. For example, a card may have been stolen and the card issuer would now like to block that card from making any further transactions. The authorisation entity 30 may identify suspect primary account numbers in other ways, such as from fraudulent patterns of transactions, records of stolen or lost cards, or from security parameters recovered from the card during previous transactions. The list sent to the terminal 20 is stored 102 at the terminal. As will be described more fully, the list sent to the terminal can also include a pairing of card details and an operation code (or other data element) to be sent to the card with the specified card details.

Communication between the terminal 20 and the card 10 comprises a card authentication stage 110 and a PIN verification stage 120. During the card authentication stage 110, the terminal 20 communicates with the card to obtain details of the card. The card 10 may support more than one payment application, such as a debit application and a credit application. The card 10 may support contact-based communication and/or contactless communication. The terminal 20 begins by selecting an 'entry point'. The card 10 responds with a list of applications supported by the card. The terminal 20 then selects a specific application from the list. In the exchanges which follow, the reader receives an indication of the files that need to be read to complete the transaction. As part of the card authentication stage 111, the reader retrieves the card PAN (Primary Account Number) and Expiry Date of the card 10.

The method then proceeds to the PIN verification stage 120. When a user makes a transaction the terminal requests the user to enter a Personal Identification Number (PIN) on the keypad of the terminal 20. Typically, a display of the terminal 20 displays a message requesting the user to enter their PIN. The PIN is sent to the card 10. The user is verified by comparing the PIN received from the terminal 20 with a PIN stored securely at the card 10. If the PIN has been entered correctly the method can proceed to a transaction authorisation stage (not shown). As explained above, the transaction may be authorised in an online manner, by communication between the card 10 and the terminal 20 (and authorisation entity 30). The card receives a response which authorises the transaction or refuses the transaction. Alternatively, the transaction may be authorised in an offline manner. The terminal may store rules which determine when it is able to perform an offline authorisation of a transaction. For example, a rule may indicate the maximum monetary amount of a transaction which can be authorised in an offline manner. The PIN verification stage 120 will now be described in detail.

The terminal 20 uses encryption when communicating the PIN data to the card 10. The card 10 has a public key and a private key. The terminal 20 can use the card's public key to encrypt data sent to the card 10. Keys and certificates are described in the EMV specifications at EMV 4.3 Book 2, section 7.1. PIN Encipherment and Verification is described in the EMV specifications at EMV 4.3 Book 2, section 7.2. The terminal requests 121 a "challenge" from the card 10. The challenge is a random string. The challenge is described as "an unpredictable number" in the EMV specifications. The card 10 sends the challenge 122 to the terminal 20.

In a conventional PIN verification method, the terminal then forms an encrypted message carrying the PIN data and sends the message to the card. In examples of this disclosure, the terminal 20 can send additional data at this stage. At 123, the terminal 20 determines if there is a need to send data to the card 10. The terminal determines if the card is on the blacklist. The terminal can compare the card details (e.g. card number, expiry date) obtained during the card authentication stage 110 with card details on the blacklist received at 100. If the card details match, then the card should be blacklisted. That is, the current transaction should be refused. The terminal can cause the card to be blocked for future transactions by communicating with the card.

If it is determined, at block 123, that the card is not on the blacklist then encrypted PIN data can be sent to the card 10 in the normal way at 124. If it is determined, at block 123, that the card is on the blacklist then a modified type of encrypted PIN data message can be sent to the card 10. The message is prepared at block 126 and sent to the card 127. The modified PIN data message may carry an operation code (OPCODE) 125. For example, the opcode may instruct the card to block the card for future transactions.

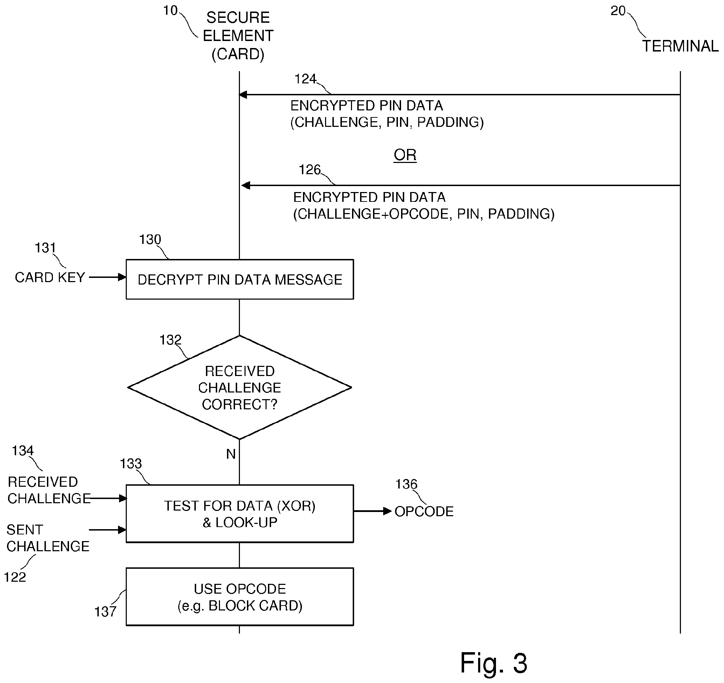

Figure 3 shows a method at the card 10. The card 10 either receives a conventional encrypted PIN data message 124, or a modified encrypted PIN data message 126, where the message 126 carries additional data. At block 130 the PIN data message (124 or 126) is decrypted using the card's key 131. Message 124, 126 is encrypted using the public key of the card. Key 131 is the corresponding private key of the card. Block 132 determines if the challenge (sent at 122, Fig. 2) corresponds to the challenge received from the terminal. If the challenge does not correspond then there are several possible reasons: (i) the terminal 20 has sent a modified message of type 126 which carries additional data, combined with the challenge; or (ii) the message was not encrypted correctly. For example, an incorrect key was used to encrypt the message. Block 133 tests for the presence of data in the received message. Block 133 uses the received challenge 143 extracted from the received message 126 and the sent challenge 122 as inputs. Block 133 outputs an opcode 136. The opcode 136 can be compared with a stored table of possible opcodes. If a match is found the opcode, or an instruction corresponding to the opcode, is used at block 137. If a match is not found for the opcode 136 then the message 124, 126 may have been encrypted incorrectly.

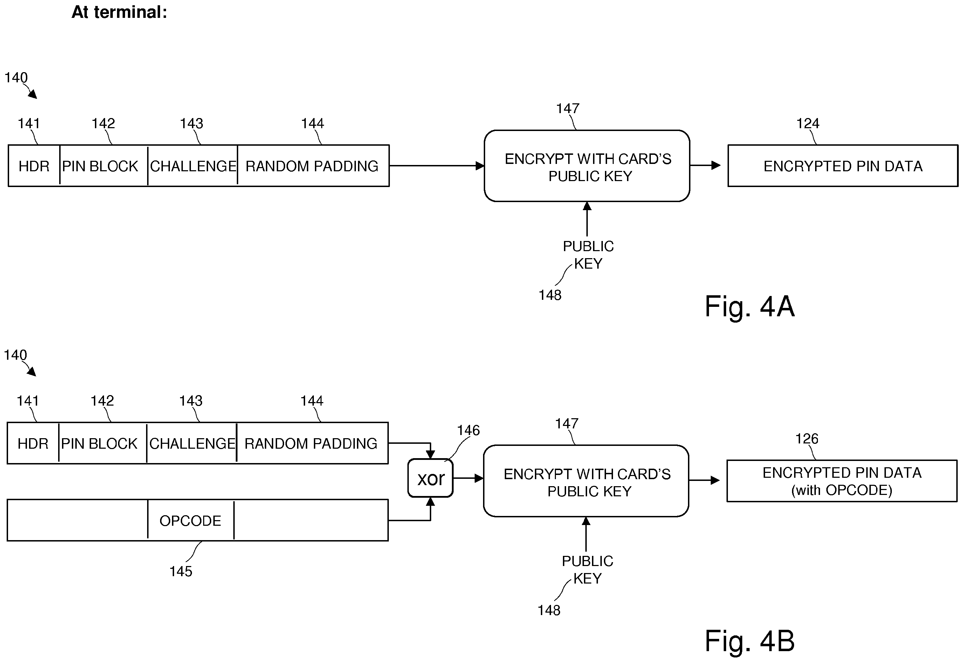

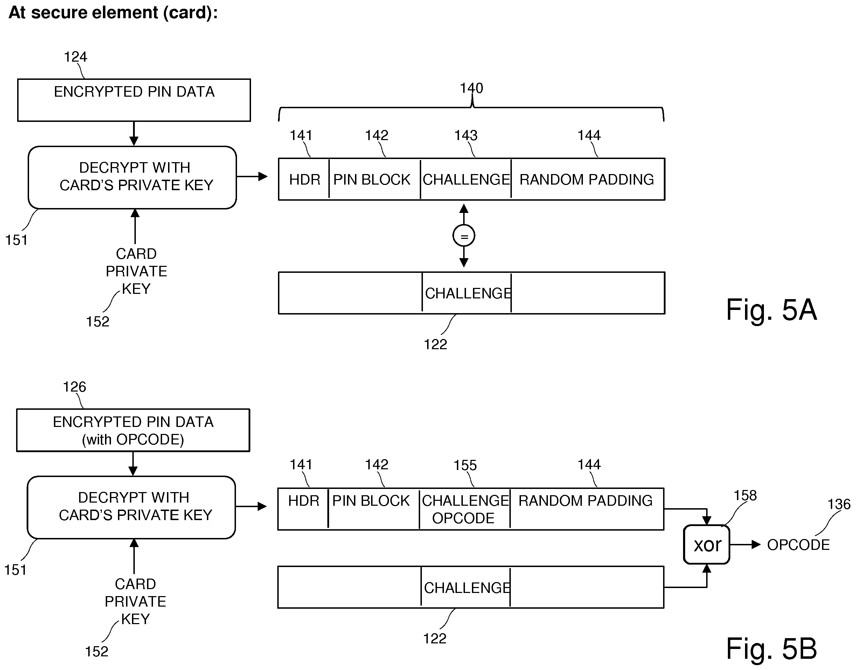

Figures 4A, 4B and 5A, 5B show more detail of how the terminal 20 and card 10 process the messages 124, 126. Figures 4A, 4B show processing of the messages 124, 126 at the terminal 20. The data 140 to be enciphered for PIN encipherment comprises:
a data header 141 (e.g. length 1 byte, hex value '7F');
a PIN block 142 (e.g. length 8 bytes);
a challenge, also called an ICC unpredictable number (e.g. length 8 bytes);
random padding.

The random padding has a length N_{IC} - 17 bytes, where N_{IC} is the total length of the public key used for encipherment. The PIN block is an encoded form of the PIN, described in EMV 4.3 Book 2 at section 6.5.12. The PIN block can include: a control field; a field indicating length of the PIN; PIN digits; filler data fields. The data fields listed above and the example field lengths are described in the EMV specifications. It will be understood that the data 140 sent to the card can include one or more additional data fields, or could lack certain data fields mentioned above, such as the padding. The data field lengths mentioned above are only example values.

Figure 4A shows processing to create a conventional PIN message 124 without additional data. Data 140 is encrypted 147 with the card's public key 148 to form the encrypted PIN data message 124.

Figure 4B shows processing to create a modified PIN message 126 with additional data. Data 140 is combined with the additional data 145. A logical bit-wise operation is performed between the data 140 and the additional data 145. The logical bit-wise operation can be an exclusive OR (XOR) operation. The additional data 145 is aligned with the challenge 143. The reason for this alignment is because the challenge is the only data value known to the card 10. The other data 142, 144 is unknown to the card 10 and cannot be used to test (Figure 3, 133) whether the message is carrying additional data. In an EMV example the challenge field has a length of 8 bytes. If the data 145 to be combined with the data 140 has a length of less than 8 bytes, then the terminal can align the data 145 with a start of the challenge field 143, an end of the challenge field 143, or any other alignment which is known to both the terminal 20 and the card 10 so that the received message can be reliably tested for the presence of additional data. The data output by block 146 is encrypted 147 with the card's public key 148 to form the modified encrypted PIN data message 126.

Figures 5A, 5B show processing of the messages 124, 126 at the terminal 20. Figure 5A shows processing of a conventional encrypted PIN message 124 without additional data. Encrypted PIN data 124 is decrypted 151 with the card's private key 152 to retrieve the decrypted PIN data 140. The received challenge 143 is compared with the sent challenge 122. If the received challenge 143 matches the sent challenge 122, then the message does not carry additional data.

Figure 5B shows processing of a modified encrypted PIN message 126 with additional data. Encrypted PIN data 126 is decrypted 151 with the card's private key 152 to retrieve the decrypted PIN data. The decrypted PIN data comprises a header 141, PIN block 142 and random padding 144. The decrypted PIN data also comprises a field 155 which carries a combination of the sent challenge 122 and additional data (opcode 145, Figure 5B). A logical operation (e.g. a bitwise XOR) 158 is performed between the modified challenge field 155 and the sent challenge 122. The opcode 136 output by operation 158 is compared to one of the stored opcodes at the card 10.

As described above, the method of sending PIN data can be performed in connection with offline transaction processing or online transaction processing. The method is particularly advantageous with offline transaction processing, as it provides a way to send additional data to the card (e.g. to block the card) which is not conventionally possible.

Figure 6 shows an example table which can be stored at the card 10. The table can be written to the card as part of the process of card personalisation. The operations - defined by op codes OPn - can be considered entry points to procedures to be executed by the card. The values stored in the op code column correspond to values found by block 133, Figure 3.

The operations defined by the op codes OPn can be related to the security of the card. They may represent ISO 7816 Application Protocol Data Unit (APDU) commands defined in the EMV standard. They may represent actions for which there is no APDU command, such as blocking a payment application, or to block all the applications on the card, or to switch the card from Static Data Authentication (SDA) to Dynamic Data Authentication (DDA) or Combined Data Authentication (CDA).

The card 10 is equipped with a means of executing commands that are received on an I/O interface in the form of APDUs. If, for example OP1, corresponds to one of these commands, then the 'entry point' provides the means for the program that executes these additional operations to execute a card command by calling it internally rather than via an APDU.

In cases where OPn does not correspond to a command that can be called via an APDU, then the 'entry point' can: provide the means for calling an operating system function (e.g. "kill card"), or provide the means for calling a function that is specifically written for achieving the desired effect. Examples of the latter include:
modifying security related limits held in particular files on the card, such data is often referred to as 'risk management' data;
switching from SDA to either DDA or CDA.

The operations OP1, etc, can be executed before the response to the APDU that contained the operation code is returned to the terminal. Referring again to Figure 6, the exec(OPn) can be considered as a call within the code of the VERIFY PIN command:

```
       VERIFY PIN {
       ...
       exec(OPn);
       ...
       return response to reader;
       }
```

An alternative is to use an event-driven model to implement the control. In this case, the column "entry point" in Figure 6 can be replaced by "event". Possible events include:
- immediately after the return of the command that carries the operation code;
- immediately, which is effectively the entry point above;
- end of transaction.

The operation codes OPn can be the same length as the CHALLENGE, i.e. eight bytes. They could be, for example, random 64-bit strings. Operation codes can be proprietary to the card issuer.

### Encrypted op codes

The issuing authority (e.g. bank) of a card holds a master key, K0. The master key, K0, is used to generate the card key K1 based on the PAN (Primary Account Number). K1 is generated during the first steps of card personalisation and stored in non-volatile memory. It remains the same throughout the life of the card. A key derivation function (kdf) generates key K2 using the key K1 and an Application Transaction Counter (ATC). As the value of the ATC increments with each transaction, K2 is unique to a particular transaction:
kdf(ATC, K1) => K2

In general new keys for specific purposes are derived from the card key, K1:
kdf(diversification-data, K1) => Kₙ

Possible kdf functions include triple-DES and AES. The diversification data may be any data that is known to both parties using the key. This follows from the fact that key derivation has to be an agreed procedure to allow the recipient of an encrypted message to generate the correct key to be able to decrypt the message.

If the operation code (OPn) corresponding to, for example, to an "APPLICATION BLOCK" operation were leaked, it would be open to an attacker to mount a denial of service attack. One defence against this attack is to encrypt the operation code:
encrypt(OPn, K3) => {OPn}_{K3}
where: {X}_{K} means X encrypted under key K.

This means that the result 136 of the operation performed at block 133, Figure 3 and also shown in Figure 5B is:
{OPn}_{K3}

A first possibility for the key K3 is a fixed key derived, for example, from a card key K1 as follows:
kdf(fixed-string, K1) => K3

In this case, the op codes stored in table of results (Figure 6) held by the card 10 are replaced by the encrypted versions of those codes, e.g. {OP1}_{K3}, {OP2}_{K3}, etc. when the table is written to the card during the card personalisation process. On the server side, the authorisation entity can either store a table for each card, or can derive the key when it is required. The option of deriving the key when it is required is advantageous as it minimises storage requirements.

The keys K0, K1, K2, K3 described above are different to the key pair of a public key and a private key used to encrypt the message which carries the PIN data. Referring again to Figure 4B, the OPCODE 145 is encrypted with key K3. The resulting data, which includes a field which is a logical combination of the challenge 143 and the encrypted OPCODE 145, is then encrypted using the card's public key 148. Similarly, in Figure 5B, the message received at 126 is first decrypted using the card's private key 152. An encrypted OPCODE 136 is extracted from the decrypted data by a logical operation on the field 155. The encrypted OPCODE 136 can then be decrypted using key K3.

Figure 7 shows an example table of data stored at the terminal. The data in this table is received from the authorisation entity 30 in the list (blacklist) 100. The data comprises card details (e.g. PAN) and an op code to be sent to the card if the terminal communicates with a card having those card details. The op code can be stored in an encrypted form. The encryption of the op code may be performed as described above. For example, each of the op codes in Figure 7 is stored in encrypted form, with the op code encrypted using the key K3 of a particular card.

Referring again to Figure 2, if the PIN is entered correctly during the PIN verification stage 120, the method can proceed to a transaction authorisation stage. During the transaction authorising stage the card can send a cryptogram to the terminal 20, which is forwarded to the authorisation entity 30. The card receives a cryptogram in reply, via the terminal 20. It is possible to modify the cryptogram sent to the card 10 to carry a data element, such as an op code. It is possible that the card 10 can receive two data elements (e.g. op codes): a first op code during the PIN verification stage 120 and a second op code during the transaction authorising stage. The card 10 can perform a prioritisation of the two op codes. In one example, the card 10 can give higher priority to the op code received during the transaction authorising stage and can give lower priority (or simply ignore) the op code received during the PIN verification stage 120. For example, the blacklist held by the authorisation entity 30 should be more up-to-date than the one held by the terminal 20 and therefore, the op code sent during the transaction authorising stage should be the most up-to-date.

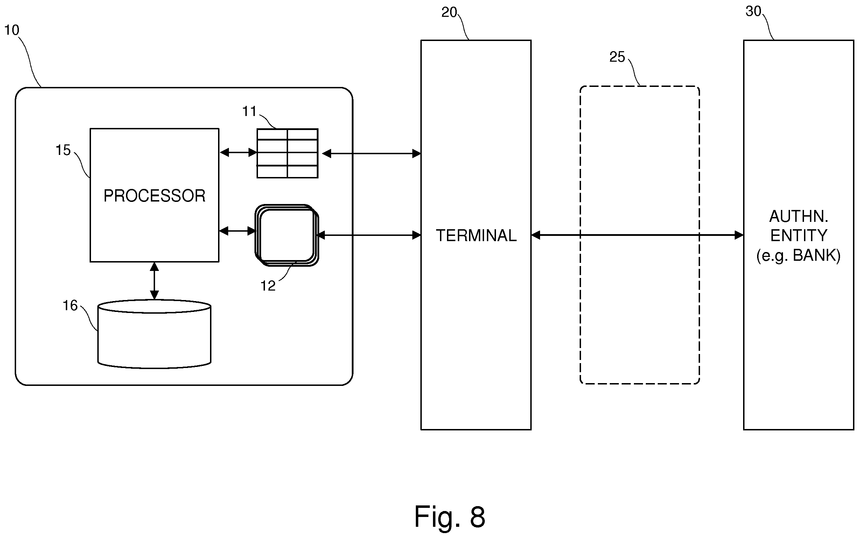

Figure 8 shows an example of an integrated circuit card (ICC) 10, or chip card which can be configured to perform the method described above. The chip card 10 comprises a processor 15 which is operatively connected to storage 16. Storage 16 includes non-volatile storage. The non-volatile storage can store applications and cryptographic keys. The chip card 10 has at least one external interface 11, 12 for communicating with a terminal 20. The external interfaces may be a contact interface 11 and/or a contactless interface 12. Communication with the terminal 20 is typically via ISO 7816 APDUs. The terminal 20 communicates with the authorisation entity 30 via a network. The secure element may be embedded into an ISO 7810 format card, such as an ID-1 format card (e.g. typically used for bank cards and credit/debit cards) or an ID-000 format card (e.g. typically used for SIM cards). In other examples, the secure element may be embedded directly into a circuit board, such as a mobile phone circuit board.

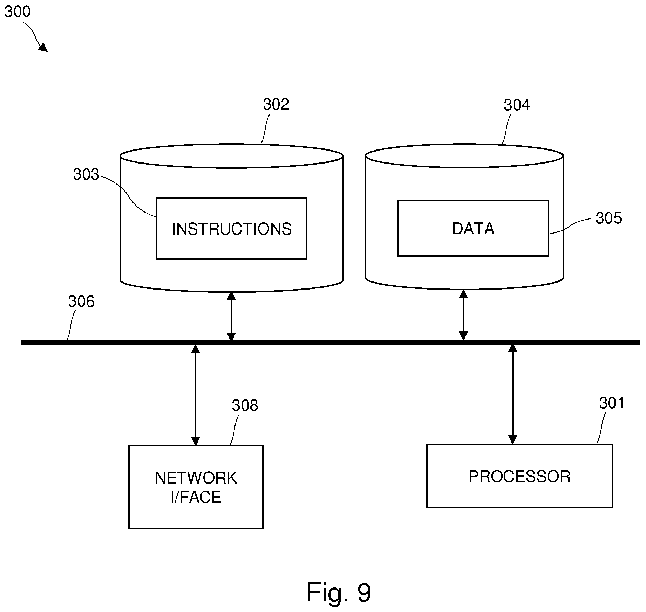

Figure 9 shows an example of processing apparatus 300 which may be implemented as any form of a computing and/or electronic device, and in which embodiments of the system and methods described above may be implemented. Processing apparatus 300 can be provided at the card 10 and/or at the terminal 20. The processing apparatus may participate in any of the methods described above. Processing apparatus 300 comprises one or more processors 301 which may be microprocessors, microcontrollers or any other suitable type of processors for executing instructions to control the operation of the device. The processor 301 is connected to other components of the device via one or more buses 306. Processor-executable instructions 303 may be provided using any computer-readable media, such as memory 302. The processor-executable instructions 303 can comprise instructions for implementing the functionality of the described methods. The memory 302 is of any suitable type such as non-volatile memory, read-only memory (ROM), random access memory (RAM), a storage device of any type such as a magnetic or optical storage device. Memory 302, or an additional memory 304, can be provided to store data 305 used by the processor 301. The data 305 can comprise a table of op codes described above. The processing apparatus 300 comprise one or more communication interfaces 308.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method of communicating between a terminal (20) and a secure element (10) comprising, at the secure element (10):
determining a challenge;
sending the challenge (122) to the terminal (20);
receiving a response (124, 126) from the terminal (20) comprising the challenge and personal identification number, PIN, data, the response encrypted with a public key;
decrypting (130) the response (124, 126) using a private key of the secure element corresponding to the public key;
determining (132) if the challenge received in the response matches the challenge sent to the terminal (20); and
if the challenge received in the response does not match the challenge sent to the terminal (20), further comprising:
performing a computation (133) using the received challenge and the sent challenge to detect the presence of additional data in the response; and
recovering, as an output of the computation (133), an operation code (136), wherein the operation code (136) is indicative of an action to be performed by the secure element.

2. A method according to claim 1 wherein performing a computation (133) comprises performing a bit-wise operation between the received challenge and the sent challenge.

3. A method according to claim 2 wherein the bit-wise operation is an exclusive OR, XOR, operation.

4. A method according to any one of the preceding claims wherein the operation code is indicative of a security action to be performed by the secure element, and the method further comprises performing (137) the security action according to a value of the operation code.

5. A method according to any one of the preceding claims wherein the operation code is encrypted.

6. A method according to any one of the preceding claims which is performed as part of an offline transaction.

7. A method of communicating between a terminal (20) and a secure element (10) comprising, at the terminal (10):
receiving a challenge (121) from the secure element (20);
determining (122) if there is a need to send an operation code to the secure element (10);
if there is not a need to send an operation code to the secure element (10), sending an encrypted response (124) to the secure element (10), the response comprising the challenge and personal identification number, PIN, data; and
if there is a need to send an operation code to the secure element (10):
performing a computation (126) of the challenge with the operation code to produce a modified challenge; and
sending an encrypted response (127) to the secure element (10), the response comprising the modified challenge and the personal identification number, PIN, data, wherein the operation code is recoverable from the modified challenge by the secure element (10), and the operation code is indicative of an action to be performed by the secure element;
wherein determining (123) if there is a need to send an operation code to the secure element (10) comprises determining if a number of the secure element (10) is on a blacklist of numbers, and if the number of the secure element (10) is on the blacklist of numbers, sending an operation code indicative of an action to block the secure element.

8. A secure element (10) comprising a processor, a memory and a communications interface, the memory containing instructions executable by the processor to cause the processor to:
determine a challenge;
send the challenge (122) to a terminal (20) via the communications interface;
receive a response (124, 126) from the terminal (20) comprising the challenge and personal identification number, PIN, data, the response encrypted with a public key;
decrypt (130) the response (124, 126) using a private key of the secure element corresponding to the public key;
determine (132) if the challenge received in the response matches the challenge sent to the terminal (20); and
if the challenge received in the response does not match the challenge sent to the terminal (20), the instructions further causing the processor to:
perform a computation (133) using the received challenge and the sent challenge to detect the presence of additional data in the response; and
recover, as an output of the computation (133), an operation code (136), wherein the operation code (136) is indicative of an action to be performed by the secure element.

9. A secure element (10) according to claim 8 wherein the computation (133) is a bit-wise operation between the received challenge and the sent challenge.

10. A secure element (10) according to claim 8 or 9 wherein the operation code is indicative of a security action to be performed by the secure element, and the instructions cause the processor to perform (137) the security action according to a value of the operation code.

11. A secure element (10) according to claim 10 wherein the operation code is encrypted.

12. A terminal (20) comprising a processor, a memory and a communications interface, the memory containing instructions executable by the processor to cause the processor to:
receive a challenge (122) from a secure element (10);
determine (123) if there is a need to send an operation code to the secure element (10);
if there is not a need to send an operation code to the secure element (10), sending an encrypted response (124) to the secure element (10), the response comprising the challenge and personal identification number, PIN, data; and
if there is a need to send an operation code to the secure element (10):
perform a computation (126) of the challenge with the operation code to produce a modified challenge; and
send an encrypted response (127) to the secure element (10), the response comprising the modified challenge and the personal identification number, PIN, data, wherein the operation code is recoverable from the modified challenge by the secure element (10), and the operation code is indicative of an action to be performed by the secure element;
wherein the instructions which cause the processor to determine (123) if there is a need to send an operation code to the secure element (10) cause the processor to determine if a number of the secure element (10) is on a blacklist of numbers, and if the number of the secure element (10) is on the blacklist of numbers, send an operation code indicative of an action to block the secure element.

## Patentansprüche

1. Verfahren zur Kommunikation zwischen einem Endgerät (20) und einem Sicherheitselement (10), umfassend am Sicherheitselement (10):
Bestimmen einer Abfrage;
Senden der Abfrage (122) an das Endgerät (20);
Empfangen einer Antwort (124, 126) vom Endgerät (20) mit der Abfrage und Daten einer persönlichen Identifikationsnummer, PIN, wobei die Antwort mit einem öffentlichen Schlüssel verschlüsselt ist;
Entschlüsseln (130) der Antwort (124, 126) unter Verwendung eines privaten Schlüssels des Sicherheitselements, der dem öffentlichen Schlüssel entspricht;
Bestimmen (132), ob die in der Antwort empfangene Abfrage mit der an das Endgerät (20) gesendeten Abfrage übereinstimmt; und
ferner umfassend, wenn die in der Antwort empfangene Abfrage mit der an das Endgerät (20) gesendeten Abfrage nicht übereinstimmt:
Durchführen einer Berechnung (133) unter Verwendung der empfangenen Abfrage und der gesendeten Abfrage, um das Vorhandensein von zusätzlichen Daten in der Antwort zu erkennen; und
Wiederherstellen eines Operationscodes (136) als ein Ergebnis der Berechnung (133), wobei der Operationscode (136) eine Maßnahme anzeigt, die vom Sicherheitselement ergriffen werden soll.

2. Verfahren nach Anspruch 1, wobei das Durchführen einer Berechnung (133) ein Durchführen einer bitweisen Operation zwischen der empfangenen Abfrage und der gesendeten Abfrage umfasst.

3. Verfahren nach Anspruch 2, wobei die bitweise Operation eine Exklusiv-OR, XOR,-Operation ist.

4. Verfahren nach einem der vorhergehenden Ansprüche, wobei der Operationscode eine Sicherheitsmaßnahme anzeigt, die vom Sicherheitselement ergriffen werden soll, und das Verfahren ferner ein Durchführen (137) der Sicherheitsmaßnahme gemäß einem Wert des Operationscodes umfasst.

5. Verfahren nach einem der vorhergehenden Ansprüche, wobei der Operationscode verschlüsselt ist.

6. Verfahren nach einem der vorhergehenden Ansprüche, das als Teil einer Offline-Transaktion durchgeführt wird.

7. Verfahren zur Kommunikation zwischen einem Endgerät (20) und einem Sicherheitselement (10), umfassend am Endgerät (20):
Empfangen einer Abfrage (122) vom Sicherheitselement (10);
Bestimmen (123), ob eine Notwendigkeit zum Senden eines Operationscodes an das Sicherheitselement (10) besteht;
Senden, wenn keine Notwendigkeit zum Senden eines Operationscodes an das Sicherheitselement (10) besteht, einer verschlüsselten Antwort (124) an das Sicherheitselement (10), wobei die Antwort die Abfrage und Daten der persönlichen Identifikationsnummer, PIN, umfasst; und
wenn eine Notwendigkeit zum Senden eines Operationscodes an das Sicherheitselement (10) besteht:
Durchführen einer Berechnung (126) der Abfrage mit dem Operationscode, um eine modifizierte Abfrage zu erzeugen; und
Senden einer verschlüsselten Antwort (127) an das Sicherheitselement (10), wobei die Antwort die modifizierte Abfrage und die Daten der persönlichen Identifikationsnummer, PIN, umfasst, wobei der Operationscode durch das Sicherheitselement (10) aus der modifizierten Abfrage wiederhergestellt werden kann, und der Operationscode eine Maßnahme anzeigt, die vom Sicherheitselement ergriffen werden soll;
wobei das Bestimmen (123), ob eine Notwendigkeit zum Senden eines Operationscodes an das Sicherheitselement (10) besteht, ein Bestimmen umfasst, ob eine Nummer des Sicherheitselements (10) auf einer schwarzen Liste von Nummern steht, und Senden, wenn die Nummer des Sicherheitselements (10) auf der schwarzen Liste von Nummern steht, eines Operationscodes, der eine Maßnahme zum Blockieren des Sicherheitselements anzeigt.

8. Sicherheitselement (10), umfassend einen Prozessor, einen Speicher und eine Kommunikationsschnittstelle, wobei der Speicher Anweisungen enthält, die vom Prozessor ausgeführt werden können, um den Prozessor zu veranlassen zum:
Bestimmen einer Abfrage;
Senden der Abfrage (122) über die Kommunikationsschnittstelle an ein Endgerät (20);
Empfangen einer Antwort (124, 126) vom Endgerät (20) mit der Abfrage und Daten einer persönlichen Identifikationsnummer, PIN, wobei die Antwort mit einem öffentlichen Schlüssel verschlüsselt ist;
Entschlüsseln (130) der Antwort (124, 126) unter Verwendung eines privaten Schlüssels des Sicherheitselements, der dem öffentlichen Schlüssel entspricht;
Bestimmen (132), ob die in der Antwort empfangene Abfrage mit der an das Endgerät (20) gesendeten Abfrage übereinstimmt; und
wobei die Anweisungen, wenn die in der Antwort empfangene Abfrage mit der an das Endgerät (20) gesendeten Abfrage nicht übereinstimmt, den Prozessor ferner veranlassen zum:
Durchführen einer Berechnung (133) unter Verwendung der empfangenen Abfrage und der gesendeten Abfrage, um das Vorhandensein von zusätzlichen Daten in der Antwort zu erkennen; und
Wiederherstellen eines Operationscodes (136) als ein Ergebnis der Berechnung (133), wobei der Operationscode (136) eine Maßnahme anzeigt, die vom Sicherheitselement ergriffen werden soll.

9. Sicherheitselement (10) nach Anspruch 8, wobei die Berechnung (133) eine bitweise Operation zwischen der empfangenen Abfrage und der gesendeten Abfrage ist.

10. Sicherheitselement (10) nach Anspruch 8 oder 9, wobei der Operationscode eine Sicherheitsmaßnahme anzeigt, die vom Sicherheitselement ergriffen werden soll, und die Anweisungen den Prozessor ferner zum Durchführen (137) der Sicherheitsmaßnahme gemäß einem Wert des Operationscodes veranlassen.

11. Sicherheitselement (10) nach Anspruch 10, wobei der Operationscode verschlüsselt ist.

12. Endgerät (20), umfassend einen Prozessor, einen Speicher und eine Kommunikationsschnittstelle, wobei der Speicher Anweisungen enthält, die vom Prozessor ausgeführt werden können, um den Prozessor zu veranlassen zum:
Empfangen einer Abfrage (122) von einem Sicherheitselement (10);
Bestimmen (123), ob eine Notwendigkeit zum Senden eines Operationscodes an das Sicherheitselement (10) besteht;
Senden, wenn keine Notwendigkeit zum Senden eines Operationscodes an das Sicherheitselement (10) besteht, einer verschlüsselten Antwort (124) an das Sicherheitselement (10), wobei die Antwort die Abfrage und Daten der persönlichen Identifikationsnummer, PIN, umfasst; und
wenn eine Notwendigkeit zum Senden eines Operationscodes an das Sicherheitselement (10) besteht:
Durchführen einer Berechnung (126) der Abfrage mit dem Operationscode, um eine modifizierte Abfrage zu erzeugen; und
Senden einer verschlüsselten Antwort (127) an das Sicherheitselement (10), wobei die Antwort die modifizierte Abfrage und die Daten der persönlichen Identifikationsnummer, PIN, umfasst, wobei der Operationscode durch das Sicherheitselement (10) aus der modifizierten Abfrage wiederhergestellt werden kann, und der Operationscode eine Maßnahme anzeigt, die vom Sicherheitselement ergriffen werden soll;
wobei die Anweisungen, die den Prozessor veranlassen, zu bestimmen (123), ob eine Notwendigkeit zum Senden eines Operationscodes an das Sicherheitselement (10) besteht, den Prozessor veranlassen zum Bestimmen, ob eine Nummer des Sicherheitselements (10) auf einer schwarzen Liste von Kartennummern steht, und Senden, wenn die Kartennummer des Sicherheitselements (10) auf der schwarzen Liste von Nummern steht, eines Operationscodes, der eine Maßnahme zum Blockieren des Sicherheitselements anzeigt.

## Revendications

1. Procédé de communication entre un terminal (20) et un élément sécurisé (10) comprenant au niveau de l'élément sécurisé (10):
déterminer un challenge ;
envoyer le challenge (122) au terminal (20) ;
recevoir une réponse (124, 126) du terminal (20) comprenant le challenge et le numéro d'identification personnel, PIN, des données, la réponse étant cryptée avec une clé publique ;
décrypter (130) la réponse (124, 126) en utilisant une clé privée de l'élément sécurisé correspondant à la clé publique ;
déterminer (132) si le challenge reçu dans la réponse correspond au challenge envoyé au terminal (20) ; et
si le challenge reçu dans la réponse ne correspond pas au challenge envoyé au terminal (20), comprend en outre:
effectuer un calcul (133) en utilisant le challenge reçu et le challenge envoyé pour détecter la présence de données supplémentaires dans la réponse ; et
récupérer, en tant que sortie du calcul (133), un code d'opération (136), où le code d'opération (136) est indicatif d'une action à exécuter par l'élément sécurisé.

2. Procédé selon la revendication 1, dans lequel l'exécution d'un calcul (133) comprend d'exécuter une opération binaire entre le challenge reçu et le challenge envoyé.

3. Procédé selon la revendication 2, dans lequel l'opération binaire est une opération OU exclusif, XOR.

4. Procédé selon l'une quelconque des revendications précédentes, dans lequel le code d'opération est indicatif d'une action de sécurité devant être exécutée par l'élément sécurisé, et le procédé comprend en outre d'effectuer (137) l'action de sécurité selon une valeur du code d'opération.

5. Procédé selon l'une quelconque des revendications précédentes, dans lequel le code d'opération est crypté.

6. Procédé selon l'une quelconque des revendications précédentes, lequel est exécuté dans le cadre d'une transaction hors ligne.

7. Procédé de communication entre un terminal (20) et un élément sécurisé (10) comprenant, au niveau du terminal (20) :
recevoir un challenge (122) de l'élément sécurisé (10) ;
déterminer (123) s'il est nécessaire d'envoyer un code d'opération à l'élément sécurisé (10) ;
s'il n'est pas nécessaire d'envoyer un code d'opération à l'élément sécurisé (10), envoyer une réponse cryptée (124) à l'élément sécurisé (10), la réponse comprenant le challenge et de numéro d'identification personnel, PIN ; et
s'il est nécessaire d'envoyer un code d'opération à l'élément sécurisé (10) :
effectuer un calcul (126) du challenge avec le code d'opération pour produire un challenge modifié ; et
envoyer une réponse cryptée (127) à l'élément sécurisé (10), la réponse comprenant le challenge modifié et les données de numéro d'identification personnel, PIN, où le code d'opération peut être récupéré à partir de le challenge modifiée par l'élément sécurisé (10), et le code d'opération est indicatif d'une action à effectuer par l'élément sécurisé ;
où déterminer (123) s'il est nécessaire d'envoyer un code d'opération à l'élément sécurisé (10) comprend de déterminer si un numéro de l'élément sécurisé (10) est sur une liste noire de numéros et, si le numéro de l'élément sécurisé (10) est sur la liste noire de numéros, d'envoyer un code d'opération indicatif d'une action pour bloquer l'élément sécurisé.

8. Élément sécurisé (10) comprenant un processeur, une mémoire et une interface de communication, la mémoire contenant des instructions exécutables par le processeur pour amener le processeur à :
déterminer un challenge ;
envoyer le challenge (122) à un terminal (20) par l'intermédiaire de l'interface de communication ;
recevoir une réponse (124, 126) du terminal (20) comprenant le challenge et de numéro d'identification personnel, PIN, la réponse étant cryptée avec une clé publique ;
décrypter (130) la réponse (124, 126) en utilisant une clé privée de l'élément sécurisé correspondant à la clé publique ;
déterminer (132) si le challenge reçu dans la réponse correspond au challenge envoyé au terminal (20) ; et
si le challenge reçu dans la réponse ne correspond pas au challenge envoyé au terminal (20), les instructions amènent en outre le processeur à :
effectuer un calcul (133) en utilisant le challenge reçu et le challenge envoyé pour détecter la présence de données supplémentaires dans la réponse ; et
récupérer, en tant que sortie du calcul (133), un code d'opération (136), où le code d'opération (136) est indicatif d'une action à exécuter par l'élément sécurisé.

9. Élément de sécurité (10) selon la revendication 8, dans lequel le calcul (133) est une opération binaire entre le challenge reçu et le challenge envoyé.

10. Élément de sécurité (10) selon la revendication 8 ou la revendication 9, dans lequel le code d'opération est indicatif d'une action de sécurité devant être exécutée par l'élément sécurisé, et les instructions amènent le processeur à exécuter (137) l'action de sécurité selon une valeur du code d'opération.

11. Élément de sécurité (10) selon la revendication 10, dans lequel le code d'opération est crypté.

12. Terminal (20) comprenant un processeur, une mémoire et une interface de communication, la mémoire contenant des instructions exécutables par le processeur pour amener le processeur à :
recevoir un challenge (122) d'un élément sécurisé (10) ;
déterminer (123) s'il est nécessaire d'envoyer un code d'opération à l'élément sécurisé (10) ;
s'il n'est pas nécessaire d'envoyer un code d'opération à l'élément sécurisé (10), envoyer une réponse cryptée (124) à l'élément sécurisé (10), la réponse comprenant le challenge et de numéro d'identification personnel, PIN ; et
s'il est nécessaire d'envoyer un code d'opération à l'élément sécurisé (10) :
effectuer un calcul (126) du challenge avec le code d'opération pour produire un challenge modifié ; et
envoyer une réponse cryptée (127) à l'élément sécurisé (10), la réponse comprenant le challenge modifié et les données de numéro d'identification personnel, PIN, où le code d'opération peut être récupéré à partir de le challenge modifiée par l'élément sécurisé (10), et le code d'opération est indicatif d'une action à effectuer par l'élément sécurisé ;
dans lequel les instructions qui amènent le processeur à déterminer (123) s'il est nécessaire d'envoyer un code d'opération à l'élément sécurisé (10) amènent le processeur à déterminer si un numéro de l'élément sécurisé (10) est sur une liste noire de numéros de cartes et, si le numéro de carte de l'élément sécurisé (10) est sur la liste noire de numéros, à envoyer un code d'opération indicatif d'une action pour bloquer l'élément sécurisé.
